# EUROPÄISCHE PATENTSCHRIFT

(11) **EP 1 176 096 B1**
(45) Veröffentlichungstag und Bekanntmachung des Hinweises auf die Patenterteilung: **31.08.2005**
(21) Anmeldenummer: 01112639.8
(22) Anmeldetag: 25.05.2001
(51) Int. Cl.: B65B 51/14

(54) **Verfahren zum Verschliessen eines befüllten, mit Seitenfalten versehenen Sackes aus thermoplastischem Kunststoff**
Method of closing a filled gusseted thermoplastic bag
Procédé pour la fermeture d'un sac rempli thermoplastique à soufflets

(30) Priorität: 28.07.2000 DE 10036908; 10.10.2000 DE 10050057
(43) Veröffentlichungstag der Anmeldung: 30.01.2002
(73) Patentinhaber: Windmöller & Hölscher, D-49525 Lengerich (DE)
(72) Erfinder: Köhn, Uwe, 49078 Osnabrück (DE)

(56) Entgegenhaltungen:
- DE-B- 2 653 524
- GB-A- 1 207 403
- GB-A- 2 144 716
- US-A- 4 373 979
- US-A- 4 453 370
- US-A- 4 561 107
- US-A- 6 004 427

## Beschreibung

Die Erfindung betrifft ein Verfahren zum Verschließen eines befüllten, mit Seitenfalten versehenen Sackes aus thermoplastischem Kunststoff, bei dem die offene Seite des Sackes straffgezogen und durch eine Querschweißnaht verschlossen wird.

Vorrichtung zum Verschließen von Säcken nach diesem Verfahren sind beispielsweise aus EP 0 439 789 B1, 93 01 355 U1 und DE 199 36 660 A1 bekannt. Durch die bekannten Vorrichtungen wird die den Sack verschließende kopfseitige Querschweißnaht durch beheizte Schweißbacken, also durch ein thermisches Schweißverfahren ausgeführt.

Die Patentschrift GB 1 207 403 offenbart eine Vorrichtung zum Verschließen offener Enden von Säcken, bei der vor dem Befüllen an dem noch flachliegenden Sack die seitlichen, die Seitenfalten erfassenden Bereiche der Querschweißnaht bis in den Übergangsbereich zu dem zweilagigen mittleren Bereich durch einen ersten Schweißvorgang gebildet werden und bei der der mittlere Bereich der Querschweißnaht nach dem Befüllen des Sacks durch einen zweiten Schweißvorgang ausgeführt wird. Der erste Schweißvorgang wird dabei durch ein thermisches Schweißverfahren ausgeführt.

Bei dem Befüllen von Säcken mit Schüttgütern lässt sich nicht vermeiden, dass sich in dem Bereich des Sackes, durch den die den Sack verschließende Querschweißnaht später ausgeführt wird, Staub und Füllgutreste ablagern, die die Ausführung einer guten und dichten Schweißnaht behindern. Aufgabe der Erfindung ist es daher, ein Verfahren der eingangs angegebenen Art zu schaffen, das auch dann ein gutes und dichtes Verschließen des Sackes durch eine Querschweißnaht ermöglicht, wenn sich in dem durch die Querschweißnaht zu verschließenden Öffnungsbereich Staub und/oder andere Verunreinigungen abgesetzt haben.

Erfindungsgemäß wird diese Aufgabe dadurch gelöst, dass der zweite Schweißvorgang durch ein Ultraschallschweißverfahren ausgeführt wird.

Nach dem erfindungsgemäßen Verfahren werden die Teile der den Sack verschließenden Querschweißnaht, die den vierlagigen Bereich der Seitenfalten erfassen, durch ein thermisches Schweißverfahren ausgeführt, das zum Verschweißen von vier Lagen besonders geeignet ist und auch eine Verschweißung des Übergangsbereichs von dem vierlagigen Seitenfaltenbereich zu dem zweilagigen mittleren Bereich ermöglicht. Diese Verschweißung des Seitenfaltenbereichs durch ein thermisches Schweißverfahren wird zu einer Zeit ausgeführt, in dem der Sack noch nicht befüllt ist und somit die miteinander zu verschweißenden Bereiche noch nicht durch Staub oder Füllgutreste verunreinigt sind. Nach dem Bilden der die Seitenfalten erfassenden Bereiche der Querschweißnaht durch ein thermisches Schweißverfahren, also beispielsweise durch übliche Schweißbacken, kann der Sack durch Haltegreifer unter der Einfüllöffnung eines Füllrüssels gehalten werden. Nach dem Befüllen des Sackes wird sodann der obere Bereich straffgezogen, so dass sich die Wandungen des zweilagigen Bereichs aneinanderlegen. Erfindungsgemäß wird dieser mittlere Bereich sodann durch eine im Ultraschallschweißverfahren ausgeführte Schweißnaht geschlossen. Der Vorteil der Verschweißung des mittleren Bereichs im Ultraschallschweißverfahren liegt darin, dass Verunreinigungen aus der Schweißzone ausgetrieben werden, so daß problemlos die Querschweißnaht zwischen den bereits zuvor ausgeführten, die Seitenfaltenbereiche erfassenden Schweißnähten ausgeführt werden kann.

Das Verschweißen von flach aufeinanderliegenden Folienlagen aus thermoplastischem Kunststoff im Ultraschallschweißverfahren ist beispielsweise aus DE 197 12 498 C2 bekannt.

Die im Ultraschallschweißverfahren ausgeführte Schweißnaht überlappt zweckmäßigerweise die über die Seitenfalten hinaus verlängerten Schweißnähte, die in einem thermischen Schweißverfahren gebildet sind.

Ein Ausführungsbeispiel der Erfindung wird nachstehend anhand der Zeichnung näher erläutert. In dieser zeigt
- Fig. 1: eine perspektivische Ansicht eines mit Seitenfalten versehenen Schlauchabschnitts aus thermoplastischem Kunststoff,
- Fig. 2: eine Draufsicht auf den Schlauchabschnitt nach Fig. 2, der an seiner Öffnungsseite mit nur die Seitenfaltenbereiche erfassenden Querschweißnähten versehen ist, und
- Fig. 3: eine der Fig. 2 entsprechende Darstellung, in der die seitlichen Querschweißnähte, die nur die Seitenfaltenbereiche erfassen, durch eine mittlere Querschweißnaht miteinander verbunden sind, die im Ultraschallschweißverfahren ausgeführt worden ist.

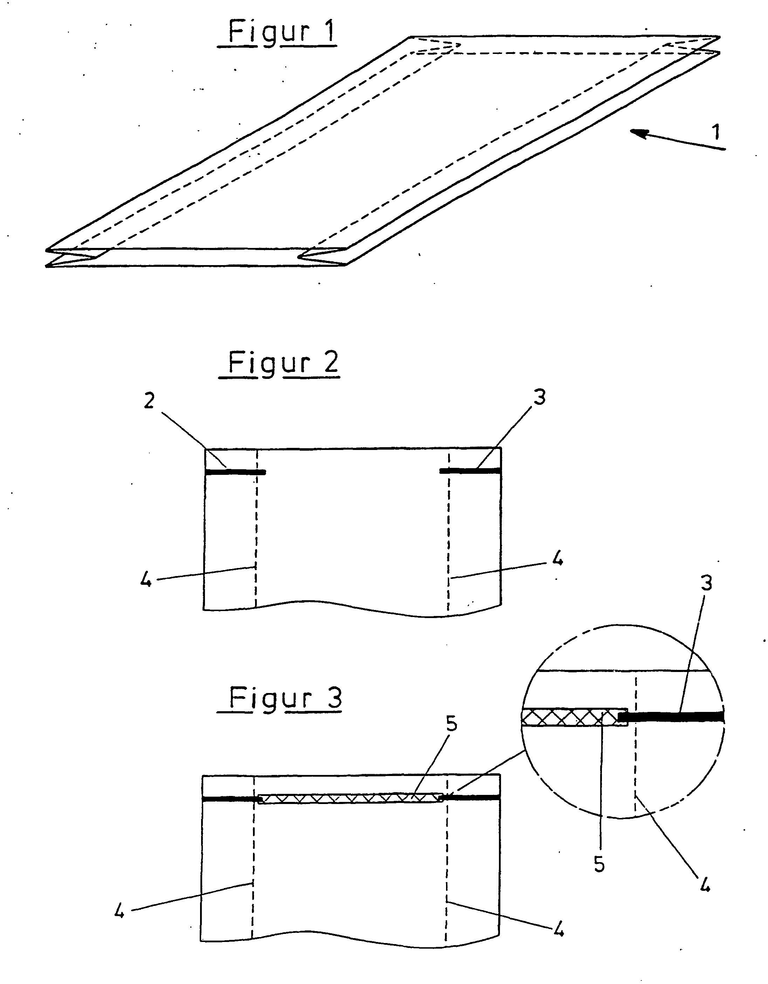

Aus Fig. 1 ist ein mit Seitenfalten versehener flachliegender Schlauchabschnitt aus thermoplastischem Kunststoff ersichtlich, aus dem durch Anbringen einer nicht dargestellten Bodenschweißnaht ein offener flachliegender Sack hergestellt wird. Vor dem Befüllen dieses Sackes werden in der aus Fig. 2 ersichtlichen Weise an dem noch flachliegenden Sack in dessen Öffnungsbereich nach einem thermischen Schweißverfahren, beispielsweise durch Schweißbacken, Teilquerschweißnähte 2, 3 angebracht, die nur die Seitenfaltenbereiche erfassen. Diese Teilquerschweißnähte sind bis über die inneren Faltkante 4 der Seitenfalten ausgeführt und enden in dem mittleren zweilagigen Bereich des Sackes in dem Übergangsbereich von dem vierlagigen Seitenfaltenbereich zu dem zweilagigen mittleren Bereich.

Nach Ausführen der Teilquerschweißnähte 2, 3 wird der flachliegende Sack beispielsweise durch Zusammenschieben der Seitenfaltenbereiche in der Weise geöffnet, daß dieser beispielsweise durch Einfahren eines Füllrüssels mit einem Schüttgut befüllt werden kann. Nach dem Befüllen des Sackes wird dessen offene Seite straffgezogen, so daß sich die Seitenwandungen aneinanderlegen. Der mittlere Bereich zwischen den Teilschweißnähten 2, 3 wird sodann durch eine diese Teilschweißnähte verbindende mittlere Querschweißnaht 5 geschlossen, die im Ultraschallschweißverfahren ausgeführt wird.

## Patentansprüche

1. Verfahren zum Verschließen eines befüllten, mit Seitenfalten versehenen Sacks aus thermoplastischem Kunststoff, bei dem die offene Seite des Sacks straffgezogen und durch eine Querschweißnaht verschlossen wird,
wobei vor dem Befüllen an dem noch flachliegenden Sack die seitlichen, die Seitenfalten erfassenden Bereiche der Querschweißnaht bis in den übergangsbereich zu dem zweilagigen mittleren Bereich durch einen ersten Schweißvorgang gebildet werden,
wobei der mittlere Bereich der Querschweißnaht nach dem Befüllen des Sacks durch einen zweiten Schweißvorgang ausgeführt wird und
wobei der erste Schweißvorgang durch ein thermisches Schweißverfahren ausgeführt wird,
**dadurch gekennzeichnet,**
**dass** der zweite Schweißvorgang durch ein Ultraschallschweißverfahren ausgeführt wird.

2. Verfahren nach Anspruch 1,
**dadurch gekennzeichnet,**
**dass** die im zweiten Schweißvorgang oder im Ultraschallschweißverfahren ausgeführte Schweißnaht die über die Seitenfalten hinaus verlängerten Teilschweißnähte überlappt.

## Claims

1. Method of closing a filled gusseted thermoplastic bag, in which the open side of the bag is drawn taught and closed by a cross-weld seam,
wherein, before filling and with the bag still lying flat, the lateral regions of the cross-weld seam that cover the side folds are formed into the transitional region to the double-layered central region by a first welding operation,
wherein, after filling the bag, the central region of the cross-weld seam is carried out by a second welding operation and
wherein the first welding operation is carried out by a thermal welding process,
**characterized in that** the second welding operation is carried out by an ultrasonic welding process.

2. Method according to Claim 1, **characterized in that** the weld seam carried out in the second welding operation -or in the ultrasonic welding process overlaps the partial weld seams that have been made to extend beyond the side folds.

## Revendications

1. Procédé pour la fermeture d'un sac rempli thermoplastique à soufflets, où le côté ouvert du sac est tendu fortement et est fermé par une soudure transversale,
où avant le remplissage, au sac reposant encore à plat, les zones latérales de la soudure transversale gagnant les soufflets sont formées jusque dans la zone de transition à la zone médiane en deux couches par une première opération de soudage,
où la zone médiane de la soudure transversale, après le remplissage du sac, est exécutée par une seconde opération de soudage et,
où la première opération de soudage est exécutée par un procédé de soudage thermique,
**caractérisé**
**en ce que** la seconde opération de soudage est réalisée par un procédé de soudage par ultrasons.

2. Procédé selon la revendication 1,
**caractérisé**
**en ce que** la soudure exécutée lors de la seconde opération de soudage ou lors du procédé de soudage par ultrasons chevauche les soudures partielles prolongées au-delà des soufflets.
